# EUROPEAN PATENT APPLICATION

(11) **EP 4 518 430 A1**
(43) Date of publication of application: **05.03.2025**
(21) Application number: 23794977.1
(22) Date of filing: 06.04.2023
(51) Int. Cl.: H04W 36/00

(54) **COMMUNICATION METHOD AND APPARATUS, DEVICE, AND STORAGE MEDIUM**

(30) Priority: 29.04.2022 CN 202210464880
(71) Applicant: Datang Mobile Communications Equipment Co., Ltd., Beijing 100085 (CN)
(72) Inventor: ZHANG, Dajun, Beijing 100085 (CN)
(74) Representative: Studio Torta S.p.A.
(86) International application number: PCT/CN2023/086645
(87) International publication number: WO 2023/207544

(57) **Abstract**

The present disclosure provides a communication method and apparatus, a device, and a storage medium. In a network architecture of a communication system, a user plane and a control plane can be designed to be separately deployed, for example, the user plane is reserved in a base station, and the control plane is independently deployed at the cloud, so that the complete separation of the user plane and the control plane is realized and the user plane and the control plane are independent of each other. On the basis of the design, on one hand, the control plane can be guaranteed to be completely independent and continuously maintained in an online state, avoiding frequent release/reconstruction operation, thus ensuring the reliability and continuity of the control plane signaling; on the other hand, the user plane can dynamically move along with the terminal device and perform dynamic deletion and replacement according to a user requirement, thereby avoiding a large amount of control signaling overhead and frequent switching of a terminal, realizing real-time matching of a network service capability and the user requirement, and further ensuring the flexibility and high efficiency of user plane data transmission.

## Description

This application claims priority to Chinese Patent Application No. 202210464880.2, filed to China National Intellectual Property Administration on April 29, 2022 and entitled "COMMUNICATION METHOD AND APPARATUS, DEVICE, AND STORAGE MEDIUM", which is hereby incorporated by reference in its entirety.

### TECHNICAL FIELD

The present disclosure relates to the field of network communication technology and, in particular, to a communication method and apparatus, a device, and a storage medium.

### BACKGROUND

In the existing 5G network architecture, a 5G base station (gNB) logical network element includes both control plane and user plane processing instances, both of which have unified signaling and data functions.

As the actual location of the UE changes, the signaling connection of the UE is switched (i.e., delete/reconstruction) between different gNBs (cells), and at the same time, the service data transmission link between the UE and the network is also transformed. Based on the existing 5G network architecture, the control plane of the gNB needs to perform releasing/reconstruction operations frequently during the above process, which leads to a large amount of control signaling overhead. In addition, there are some inherent defects in the existing network architecture, such as the reliability and continuity of control plane signaling, and the flexibility and efficiency of user plane data transmission.

### SUMMARY

The present disclosure provides a communication method and apparatus, a device, and a storage medium to solve the problems existing in the prior art.

In a first aspect, the present disclosure provides a communication method, applied to a control plane, where the control plane and a user plane are separately deployed, and the method includes:
sending a second connection establishment response message to the user plane in response to receiving a second connection establishment request message from the user plane;
sending a third connection establishment request message to a core network; and
sending a connection management message to the user plane in response to receiving a third connection establishment response message from the core network.

In some embodiments, sending the second connection establishment response message to the user plane in response to receiving the second connection establishment request message from the user plane includes:
establishing terminal device UE context information in response to receiving the second connection establishment request message from the user plane, and sending the second connection establishment response message to the user plane.

In some embodiments, sending the connection management message to the user plane in response to receiving the third connection establishment response message from the core network includes:
updating UE context information and sending the connection management message to the user plane in response to receiving the third connection establishment response message from the core network.

In some embodiments, further including:
sending a second connection update request message to the core network in response to receiving a first connection update request message from a UE;
sending a first connection update response message to the UE in response to receiving a second connection update response message from the core network; and
sending a connection update message to the UE, where the connection update message is used to indicate the UE to perform access point TRP update processing and/or configuration update processing for a wireless parameter.

In some embodiments, the method further includes at least one of the following:
the second connection establishment request message comprises a connection establishment request sent by the user plane to the control plane;
the second connection establishment response message comprises a connection establishment response sent by the control plane to the user plane;
the third connection establishment request message comprises a service request sent by the control plane to the core network;
the third connection establishment response message comprises a service response sent by the core network to the control plane;
the first connection update request message comprises a signaling connection update request sent by the UE to an updated target control plane;
the first connection update response message comprises a signaling connection update response sent by the target control plane to the UE;
the second connection update request message comprises a bearer update request sent by the target control plane to the core network;
the second connection update response message comprises a bearer update response sent by the core network to the target control plane.

In a second aspect, the present disclosure provides a communication method, applied to a user plane, the user plane and a control plane are separately deployed, and the method includes:
sending a second connection establishment request message to the control plane in response to receiving a first connection establishment request message from a UE;
sending a first connection establishment response message to the terminal device UE in response to receiving a second connection establishment response message from the control plane; and
sending a connection configuration update message to the UE in response to receiving a connection management message from the control plane, where the connection configuration update message is used to indicate the UE to perform access point TRP update processing and/or configuration update processing for a wireless parameter.

In some embodiments, the method further includes at least one of the following:
the first connection establishment request message comprises a service establishment request sent by the UE to the user plane;
the first connection establishment response message comprises a connection establishment response sent by the user plane to the UE.

In a third aspect, the present disclosure provides a communication method, applied to a core network, the method includes:
sending a third connection establishment response message to a control plane in response to receiving a third connection establishment request message from the control plane;
where the control plane and the user plane are separately deployed.

In some embodiments, further including:
sending a second connection update response message to a target control plane in response to receiving a second connection update request message from the target control plane.

In a fourth aspect, the present disclosure provides a communication method, applied to a terminal device, where the method includes:
sending a first connection establishment request message to a user plane, where the user plane and a control plane are separately deployed;
receiving a first connection establishment response message sent by the user plane; and
performing access point TRP update processing and/or configuration update processing for a wireless parameter in response to receiving a connection configuration update message from the user plane.

In some embodiments, further including:
sending a first connection update request message to an updated target control plane when there is a control plane connection update requirement.
receiving a first connection update response message from the target control plane; and
performing access point TRP update processing and/or configuration update processing for a wireless parameter in response to receiving a connection update message from the target control plane.

In some embodiments, determining that there is the control plane connection update requirement for the UE when a location of the UE changes.

In some embodiments, determining that there is the control plane connection update requirement for the UE when the location of the UE changes and a distance between a post-changing location and a prior-changing location reaches a preset threshold.

In some embodiments, sending the first connection establishment request message to the user plane includes:
selecting a user plane entity or instance of the user plane in a case that there is a network access requirement, and sending the first connection establishment request message to the selected user plane entity or instance.

In a fifth aspect, the present disclosure provides a communication apparatus, applied to a user plane, where the user plane and a control plane are separately deployed, the apparatus includes:
a first sending module, configured to send a second connection establishment request message to the control plane in response to receiving a first connection establishment request message from a UE;
a second sending module, configured to send a first connection establishment response message to the terminal device UE in response to receiving a second connection establishment response message from the control plane; and
a third sending module, configured to send a connection configuration update message to the UE in response to receiving a connection management message from the control plane, where the connection configuration update message is used to indicate the UE to perform access point TRP update processing and/or configuration update processing for a wireless parameter.

In a sixth aspect, the present disclosure provides a communication apparatus, applied to a control plane, where the control plane and a user plane are separately deployed, the apparatus includes:
a first sending module, configured to send a second connection establishment response message to the user plane in response to receiving a second connection establishment request message from the user plane;
a second sending module, configured to send a third connection establishment request message to a core network;
a third sending module, configured to send a connection management message to the user plane in response to receiving a third connection establishment response message from the core network.

In a seventh aspect, the present disclosure provides a communication apparatus, applied to a core network, where the apparatus includes:
a first sending module, configured to send a third connection establishment response message to the control plane in response to receiving a third connection establishment request message from the control plane;
where the control plane and the user plane are separately deployed.

In an eighth aspect, the present disclosure provides a communication apparatus, applied to a terminal device, the device includes:
a sending module, configured to send a first connection establishment request message to a user plane, where the user plane and a control plane are separately deployed;
a receiving module, configured to receive a first connection establishment response message sent by the user plane; and
a processing module configured to perform access point TRP update processing and/or configuration update processing for a wireless parameter in response to receiving a connection configuration update message from the user plane.

In a ninth aspect, the present disclosure provides a user plane device including a memory, a communication module, and a processor:
the memory is configured to store a computer program; the communication module is configured to send and receive data under the control of the processor; the processor is configured to read the computer program in the memory and perform the following operations:
sending a second connection establishment request message to the control plane in response to receiving a first connection establishment request message from a UE;
sending a first connection establishment response message to the terminal device UE in response to receiving a second connection establishment response message from the control plane; and
sending a connection configuration update message to the UE in response to receiving a connection management message from the control plane, where the connection configuration update message is used to indicate the UE to perform an access point TRP update processing and/or a configuration update processing for a wireless parameter.

In a tenth aspect, the present disclosure provides a control plane device including a memory, a communication module, and a processor:
the memory is configured to store a computer program; the communication module is configured to send and receive data under the control of the processor; the processor is configured to read the computer program in the memory and perform the following operations:
sending a second connection establishment response message to the user plane in response to receiving a second connection establishment request message from a user plane;
sending a third connection establishment request message to a core network; and
sending a connection management message to the user plane in response to receiving a third connection establishment response message from the core network.

In an eleventh aspect, the present disclosure provides a core network device including a memory, a communication module, and a processor:
the memory is configured to store a computer program; the communication module is configured to send and receive data under the control of the processor; the processor is configured to read the computer program in the memory and perform the following operations:
sending a third connection establishment response message to a control plane in response to receiving a third connection establishment request message from the control plane;
where the control plane and a user plane are separately deployed.

In a twelfth aspect, the present disclosure provides a terminal device, including a memory, a communication module, and a processor:
the memory is configured to store a computer program; the communication module is configured to send and receive data under the control of the processor; and the processor is configured to read the computer program in the memory and performing the following operations:
sending a first connection establishment request message to a user plane, where the user plane and a control plane are separately deployed;
receiving a first connection establishment response message sent by the user plane;
performing access point TRP update processing and/or configuration update processing for a wireless parameter in response to receiving a connection configuration update message from the user plane.

In a thirteenth aspect, the present disclosure provides a computer program product including a computer program that, when executed by a processor, implements the communication method described above.

The present disclosure provides a communication method and apparatus, a device, and a storage medium, in the network architecture of a communication system, the user plane and the control plane can be designed to be separately deployed, such as retaining the user plane at a base station and deploying the control plane separately in a cloud, so as to realize the complete separation of the user plane and the control plane and the independence of the two. Based on the above design, on one hand, the control plane can be guaranteed to be completely independent and continuously maintained in an online state, avoiding frequent release/reconstruction operation, thus ensuring the reliability and continuity of the control plane signaling; on the other hand, the user plane can dynamically move along with the terminal device and perform dynamic deletion and replacement according to a user requirement, thereby avoiding a large amount of control signaling overhead and frequent switching of a terminal, realizing real-time matching of a network service capability and the user requirement, and further ensuring the flexibility and high efficiency of user plane data transmission.

### BRIEF DESCRIPTION OF DRAWINGS

The accompanying drawings illustrated here are incorporated into and constitute a part of the present disclosure. The illustrative embodiments of the present disclosure and their descriptions are used to explain the present disclosure.
FIG. 1 is a schematic diagram of an existing 5G network architecture.
FIG. 2 is a schematic flowchart of signaling establishment in an existing communication process.
FIG. 3 is a schematic diagram of a network architecture of a communication system provided by an embodiment of the present disclosure.
FIG. 4 is a schematic diagram of a communication method provided by an embodiment of the present disclosure.
FIG. 5 is another schematic diagram of a communication method provided by an embodiment of the present disclosure.
FIG. 6 is a schematic diagram of a communication apparatus provided by an embodiment of the present disclosure.
FIG. 7 is a schematic diagram of a communication apparatus provided by an embodiment of the present disclosure.
FIG. 8 is a schematic diagram of a communication apparatus provided by an embodiment of the present disclosure.
FIG. 9 is a schematic diagram of a communication apparatus provided by an embodiment of the present disclosure.
FIG. 10 is a schematic structural diagram of a user plane device provided by an embodiment of the present disclosure.
FIG. 11 is a schematic structural diagram of a control plane device provided by an embodiment of the present disclosure.
FIG. 12 is a schematic structural diagram of a core network device provided by an embodiment of the present disclosure.
FIG. 13 is a schematic structural diagram of a terminal device provided by an embodiment of the present disclosure.

Through the above drawings, the specific embodiments of the present application have been shown, and will be described in more detail later. These figures and descriptions are not intended to limit the scope of the concept of the present application in any way, but to explain the concept of the present application for those skilled in the art by referring to specific embodiments.

### DESCRIPTION OF EMBODIMENTS

In order to make the purpose, technical scheme and advantages of the embodiment of the present invention more clear, the technical solutions in embodiments of the present invention will be described clearly and comprehensively with reference to the accompanying drawings. Apparently, the described embodiments are merely a part rather than all of the embodiments of the present invention. Other embodiments acquired by a person of ordinary skill in the art based on the embodiments of the present invention without paying creative efforts shall fall within the protection scope of the present invention.

The terminology used in the embodiments of the present disclosure is for the purpose of describing specific embodiments only and is not intended to limit the present invention. The singular forms of "a" and "the" used in the embodiments of this disclosure are also intended to include the plural forms, unless the context clearly indicates other meaning.

It should also be noted that the terms "including", "containing" or any other variation thereof are intended to cover non-exclusive inclusion, so that a commodity or system including a series of elements includes not only those elements, but also other elements not explicitly listed, or elements inherent to such commodity or system. Without more restrictions, an element defined by the phrase "including one" does not exclude the existence of other identical elements in the commodity or system that includes the element.

In the existing 5G network architecture, the 5G base station (gNB) logical network element includes both control plane and user plane processing instances, both of which have unified signaling and data functions.

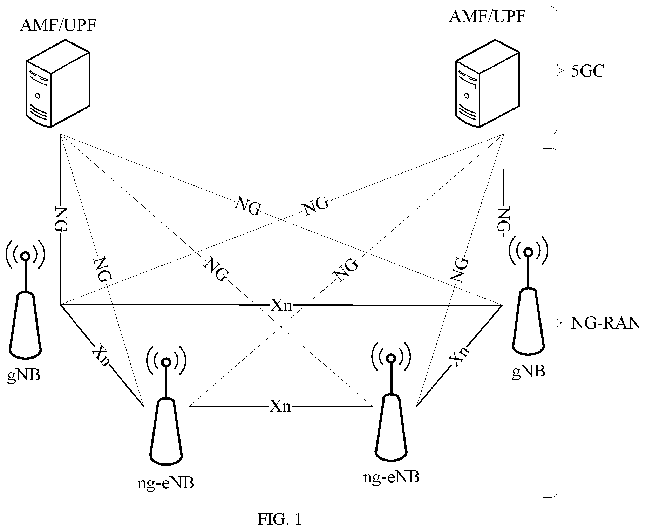

FIG. 1 is a schematic diagram of the existing 5G network architecture, which is explained by taking a dual-connection network scenario as an example. As shown in FIG. 1, the 5G network architecture includes a 5G core network (5GC) and a 5G radio access network (NG-RAN), where 5GC includes an access and mobility management function (Access and Mobility Management Function, AMF) and a user plane function (User Plane Function, UPF). The NG-RAN includes a 5G base station (gNB) and an enhanced 4G base station (ng-eNB). In the 5G network architecture shown in FIG. 1, a terminal device (UE) accesses the gNB through the wireless interface, and then the gNB establishes the radio resource control (Radio Resource Control, RRC) signaling connection on the control plane and allocates a radio resource on the user plane.

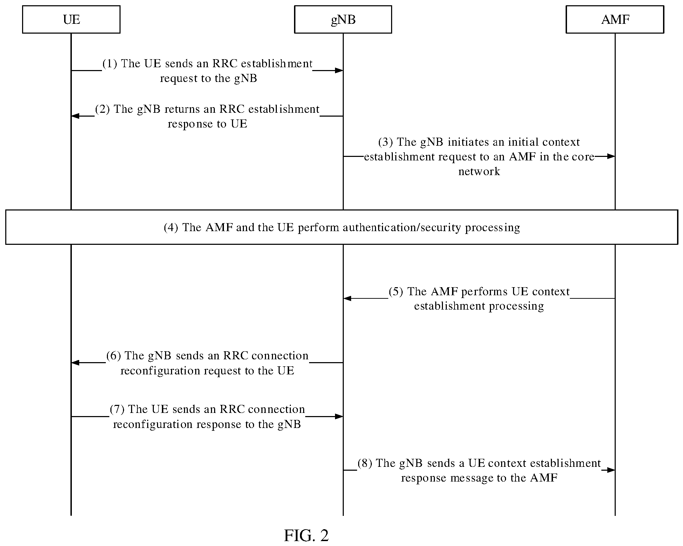

FIG. 2 is a schematic flowchart of signaling establishment in an existing communication process. As shown in FIG. 2, in the signaling establishment process, the communication process between an UE and a 5G base station and a core network mainly includes the following steps:
(1) the UE sends an RRC establishment request to the gNB;
(2) the gNB returns an RRC establishment response to UE;
(3) the gNB initiates an initial context establishment request to an AMF in the core network;
(4) the AMF and the UE perform authentication/security processing;
(5) the AMF performs UE context establishment processing;
(6) the gNB sends an RRC connection reconfiguration request to the UE;
(7) the UE sends an RRC connection reconfiguration response to the gNB;
(8) the gNB sends a UE context establishment response message to the AMF.

In the process of the terminal access to the network, the gNB completes the establishment of control plane connection through steps (1) to (2). Through steps (3) to (5), the gNB completes network authentication. Through steps (6) to (7), the gNB completes the establishment of the data channel.

As the actual location of the UE changes, the signaling connection of the UE is switched (i.e., delete/reconstruction) between different gNBs (cells), and at the same time, the service data transmission link between the UE and the network is also transformed. Based on the existing 5G network architecture, the control plane of the gNB needs to perform releasing/reconstruction operations frequently during the above process, which leads to a large amount of control signaling overhead. In addition, there are some inherent defects in the existing network architecture, such as the reliability and continuity of control plane signaling, and the flexibility and efficiency of user plane data transmission.

The communication method provided by the present disclosure aims to solve the above technical problems in the prior art.

The main idea of the scheme in this disclosure is that in the network architecture of communication system, the user plane and the control plane can be designed to be separately deployed, such as retaining the user plane at a gNB and deploying the control plane separately in a cloud, so as to realize the complete separation of the user plane and the control plane and the independence of the two. Based on the above design, on the one hand, the control plane can be guaranteed to be completely independent and continuously maintained in an online state, avoiding frequent release/reconstruction operation, thus ensuring the reliability and continuity of the control plane signaling; on the other hand, the user plane can dynamically move along with the UE and perform dynamic deletion and replacement according to a user requirement, thereby avoiding a large amount of control signaling overhead and frequent switching of a terminal, realizing real-time matching of a network service capability and the user requirement, and further ensuring the flexibility and high efficiency of user plane data transmission.

It can be understood that the technical scheme disclosed in this disclosure can be applied to the present or future communication system network architecture, such as the 6G network architecture, so as to help the 6G network architecture realize a user-centered network.

The technical scheme of the present disclosure and how the technical scheme of the present disclosure can solve the above technical problems will be described in detail with specific examples. The following specific embodiments can be combined with each other, and the same or similar concepts or processes may not be repeated in some embodiments. Embodiments of the present disclosure will be described below with reference to the accompanying drawings.

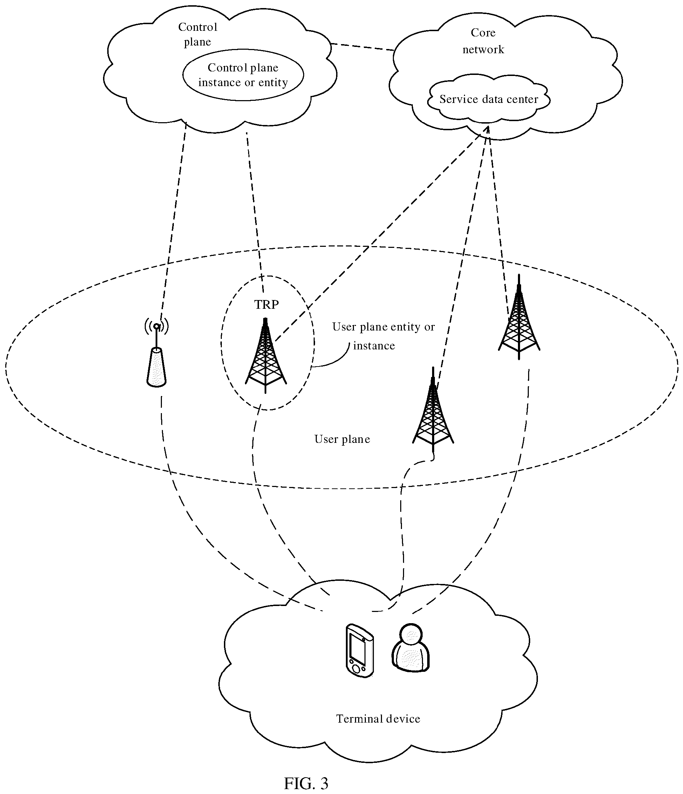

In some embodiments, a communication system is provided, and FIG. 3 is a schematic diagram of a network architecture of a communication system provided by an embodiment of the present disclosure. As shown in FIG. 3, the communication system includes a user plane, a control plane and a core network, where the user plane and the control plane are separately deployed.

Specifically, the control plane can be set in the cloud (referred to as the control plane cloud for short), that is, the control plane exists independently of other structures in the communication system. The control plane cloud can be specifically understood as a functional platform composed of one or more control plane instances or entities, where the entities can be logical entities and the instances can be logical instances, and the control plane cloud performs RRC-related functions for the UE, which at least includes radio resource configuration, mobility control management and other functions.

In the existing network architecture, the control plane and the user plane are set in a gNB at the same time. However, by setting the control plane and the gNB independently, the present disclosure can ensure that the control plane is completely independent and continuously maintained the online state, and avoid frequent release/reconstruction operation. When the control plane is online continuously, if there is communication demand, the operation time for control plane to go online can be saved, which is helpful to reduce communication delay.

Referring to FIG. 3, at the radio access network side, the user plane is a user plane transmission group composed of one or more user plane entities or instances, where the entities can be logical entities and the instances can be logical instances. Each user plane logical entity or logical instance performs corresponding functions such as protocol stack processing and data transmission, such as signaling data and various types of service data for the UE, such as L1/2/3 protocol processing, data scheduling/transmission, etc. The logical entity or logical instance of the user plane is respectively connected with the service data center of the core network and/or the control plane cloud of the wireless access network. The logical entity or logical instance of the user plane can specifically be, for example, the access point TRP in FIG. 3.

In the network architecture shown in FIG. 3, the logical entity or logical instance of the control plane is completely separated from the logical entity or logical instance of the user plane, and they are independent of each other. The two logical entities or logical instances can communicate and connect through standard interfaces.

Optionally, a separate standard interface is adopted to connect the control plane cloud (control plane logical entity or logical instance) and the network elements of the core network to support the corresponding non-access stratum (Non Access Stratum, NAS) signaling transmission.

Optionally, a separate standard interface is adopted between the logical entity or logical instance of the user plane and the data center or the gateway of the core network to support the corresponding business data transmission.

Based on the network architecture design shown in FIG. 3, on one hand, the control plane can be guaranteed to be completely independent and continuously maintained in an online state, avoiding frequent release/reconstruction operation, thus ensuring the reliability and continuity of the control plane signaling; on the other hand, the user plane can dynamically move along with the UE and perform dynamic deletion and replacement according to a user requirement, thereby avoiding a large amount of control signaling overhead and frequent switching of a terminal, realizing real-time matching of a network service capability and the user requirement, and further ensuring the flexibility and high efficiency of user plane data transmission.

In some embodiments, a communication method is provided based on the network architecture in which the user plane and the control plane are separately deployed as shown in FIG. 3, for example, the communication method can be applied in the signaling connection establishment process of the UE, the user plane, the control plane and the core network.

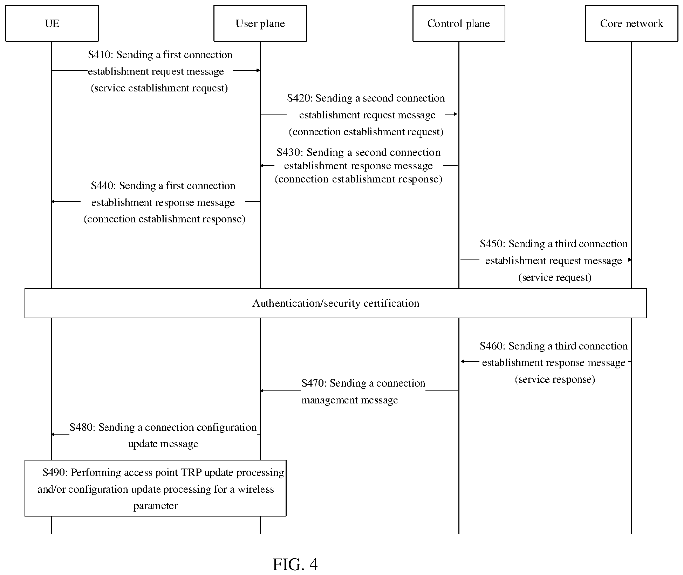

FIG. 4 is a schematic diagram of a communication method provided by an embodiment of the present disclosure. As shown in FIG. 4, the method mainly includes the following steps.

S410: a UE sends a first connection establishment request message to a user plane.

When the UE selects a certain user plane logical entity or logical instance to access the wireless network, the UE sends a corresponding first connection establishment request message to the selected user plane logical entity or logical instance.

Optionally, the first connection establishment request message includes a service establishment request sent by the UE to the user plane, that is, the UE requests access to the wireless network.

Optionally, in a case that there is a network access requirement, the UE selects a user plane logical entity or logical instance in the user plane, and sends the first connection establishment request message to the selected user plane logical entity or logical instance. For example, when the UE needs to perform the network service, it can be considered that the UE has a network access requirement.

S420: the user plane sends a second connection establishment request message to the control plane in response to receiving the first connection establishment request message from the UE.

After receiving the first connection establishment request message from the UE, the user plane logical entity or logical instance selects a certain control plane logical entity or logical instance that meets the communication requirement, and sends the corresponding second connection establishment request message to the control plane logical entity or logical instance through the standard interface between the user plane and the control plane.

Optionally, the second connection establishment request message includes a connection establishment request sent by the user plane to the control plane, that is, the user plane initiates a signaling connection establishment request process to the control plane.

S430: the control plane sends a second connection establishment response message to the user plane in response to receiving the second connection establishment request message from the user plane.

After receiving the second connection establishment request message from the user plane logic entity or logic instance, the control plane logic entity or logic instance sends the corresponding second connection establishment response message to the user plane logic entity or logic instance through the standard interface between the user plane and the control plane.

Optionally, after receiving the second connection establishment request message from the user plane logical entity or logical instance, the control plane logical entity or logical instance first establishes the context information for the UE, allocates the unique signaling identification information, and then returns the second connection establishment response message to the user plane logical entity or logical instance.

Optionally, the second connection establishment response message includes a connection establishment response sent by the control plane to the user plane.

S440: the user plane sends a first connection establishment response message to the terminal device UE in response to receiving the second connection establishment response message from the control plane; correspondingly, the UE receives the first connection establishment response message sent by the user plane.

After receiving the second connection establishment response message from the control plane logic entity or logic instance, the user plane logic entity or logic instance sends the corresponding first connection establishment response message to the UE.

Optionally, the first connection establishment response message includes a connection establishment response sent by the user plane to the UE to complete the RRC signaling connection establishment process.

S450: the control plane sends a third connection establishment request message to the core network.

After sending the second connection establishment response message to the user plane logic entity or logic instance, the control plane logic entity or logic instance selects a core network element that meet the communication requirement and sends the third connection establishment request message to the core network.

Optionally, the third connection establishment request message includes the service request sent by the control plane to the core network, that is, the control plane initiates a service connection establishment request process to the non-access network to the core network, such as registration, service establishment and other processes.

S460: the core network sends a third connection establishment response message to the control plane in response to receiving the third connection establishment request message from the control plane.

After receiving the third connection establishment request message from the logical entity or logical instance of the control plane, the core network firstly carries out signaling processes related to authentication/security certification with the UE. After the authentication/security certification is completed, the core network returns the third connection establishment response message of the non-access network to the logical entity or logical instance of the control plane.

Optionally, the third connection establishment response message includes a service response sent by the core network to the control plane.

S470: the control plane sends a connection management message to the user plane in response to receiving the third connection establishment response message from the core network.

After receiving the third connection establishment response message from the core network, the control plane logical entity or logical instance sends the corresponding connection management message to the user plane logical entity or logical instance.

Optionally, in response to receiving the third connection establishment response message, the control plane logical entity or logical instance first updates and saves the UE context information for the UE, and then sends a connection management message to the user plane logical entity or logical instance.

S480: the user plane sends a connection configuration update message to the UE in response to receiving the connection management message from the control plane, where the connection configuration update message is used to indicate the UE to perform access point TRP update processing and/or configuration update processing for a wireless parameter.

After receiving the connection management message from the control plane logical entity or logical instance, the user plane logical entity or logical instance initiates a signaling management process for the UE to perform operations such as configuration change.

S490: the UE performs the access point TRP update processing and/or the configuration update processing for the wireless parameter in response to receiving the connection configuration update message from the user plane.

After receiving the connection configuration update message from the user plane logical entity or logical instance, the UE performs the update operation processing of the access point (Transmission Reception Point, TRP), or the configuration update processing for the wireless parameter, or performs the access point TRP update processing and the configuration update processing for the wireless parameter.

The above is the main step flow of the signaling connection establishment process among the UE, the user plane, the control plane and the core network. Based on the above processing flow, the UE can successfully complete the network access operation for the network architecture that the user plane and the control plane are separately deployed. In the above processing, since the control plane is completely independent and continuously maintains an online state, frequent release/reconstruction operation can be avoided, thus ensuring the reliability and continuity of control plane signaling.

After the UE maintains the signaling connection with the network device, if the UE needs to update the control plane connection, such as the need to change the logical entity or logical instance of the control plane due to the location change of the UE, the UE can perform the signaling connection replacement process. The following explains the processing flow of the signaling connection replacement process.

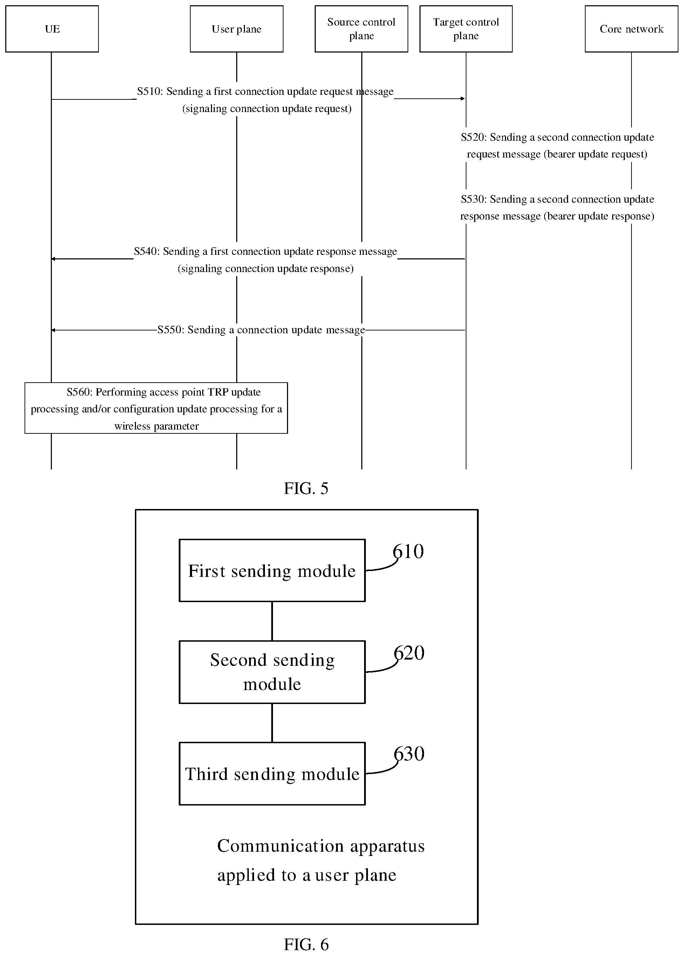

FIG. 5 is another schematic diagram of the communication method provided by an embodiment of the present disclosure. As shown in FIG. 5, the method mainly includes the following steps.

S510: the UE sends a first connection update request message to the updated target control plane when there is a control plane connection update requirement.

In the process of signaling connection replacement, the control plane logical entity or logical instance previously accessed by the UE is a source control plane logical entity or logical instance, and the control plane logical entity or logical instance that the UE expects to replace is a target control plane logical entity or logical instance. The UE can initiate the first connection update request message to the target control plane logical entity or logical instance through a certain user plane logical entity or logical instance, for example, the UE first sends a first connection update request message to a user plane logical entity or logical instance, and the user plane logical entity or logical instance forwards the first connection update request message to the corresponding target control plane logical entity or logical instance.

Optionally, the first connection update request message includes a signaling connection update request sent by the UE to the updated target control plane.

Optionally, if the location of the UE changes, it is determined that the UE has the control plane connection update requirement. That is to say, when the location of the UE changes, it can be considered that the UE needs to update the control plane connection.

Optionally, if the location of the UE changes, and a distance between a post-changing location and a prior-changing location reaches a preset threshold, it is determined that there is the control plane connection update requirement for the UE. It can be understood that when the location of the UE changes, the distance between the post-changing location and the prior-changing location can be compared with a preset threshold to determine whether there is a big location change of the UE. If the distance between the post-changing location and the prior-changing location is less than the preset threshold, it can be considered that the location change of the UE is small, and there is no need for the UE to update the control plane connection; if the distance between the post-changing location and the prior-changing location reaches the preset threshold, it can be considered that the location of the UE has changed greatly, and the UE needs to update the control plane connection. Therefore, by comparing the location change of the UE with the preset threshold, the unnecessary control plane connection updating process can be reduced, thereby reducing the network signaling overhead.

S520: the target control plane sends a second connection update request message to the core network in response to receiving the first connection update request message from the UE.

After receiving the first connection update request message from the UE, the logical entity or logical instance of the target control plane sends the corresponding second connection update request message to the core network.

Optionally, after receiving the first connection update request message, the logical entity or logical instance of the target control plane first establishes new UE context information for the UE and allocates new displacement signaling identification information, and then selects a core network element meeting the communication requirement and sends a second connection update request message.

Optionally, the second connection update request message includes a bearer update request sent by the target control plane to the core network, that is, the target control plane initiates an update request process to a non-access network to the core network, such as registration or service update and other processes.

S530: the core network sends a second connection update response message to the target control plane in response to receiving the second connection update request message from the target control plane.

After receiving the second connection update request message from the target control plane logical entity or logical instance, the core network returns the corresponding message for update of the non-access network to the target control plane logical entity or logical instance.

Optionally, the second connection update response message includes a bearer update response sent by the core network to the target control plane.

S540: the target control plane sends a first connection update response message to the UE in response to receiving the second connection update response message from the core network. Accordingly, the UE receives the first connection update response message sent by the target control plane.

After receiving the second connection update response message from the core network, the logical entity or logical instance of the target control plane sends the corresponding first connection update response message to the UE.

Optionally, after receiving the second connection update response message from the core network, the target control plane logical entity or logical instance first updates and saves the new UE context information for the UE, and then returns the corresponding first connection update response message to the UE.

Optionally, the first connection update response message includes a signaling connection update response sent by the target control plane to the UE.

S550: the target control plane sends a connection update message to the UE.

After sending the first connection update response message to the UE, the logical entity or logical instance of the target control plane initiates the signaling management process for the UE, that is, by sending the connection update message to perform configuration change and other processing.

S560: the UE performs access point TRP update processing and/or configuration update processing for a wireless parameter in response to receiving the connection update message from the target control plane.

After receiving the connection update message from the logical entity or logical instance of the target control plane, the UE performs the change operation of the access point according to the connection update message. For example, performing the update operation processing of the TRP, or performing the configuration update processing for the wireless parameter, or performing the TRP update processing and the configuration update processing for the wireless parameter.

The above is the main step flow of the signaling connection replacement process among the UE, the user plane, the control plane and the core network. Based on the above processing flow, the UE can successfully perform the signaling connection replacement process for the network architecture that the user plane and the control plane are separately deployed. In the above processing, since the user plane can dynamically move along with the UE and perform dynamic deletion and replacement according to the user requirement, thereby avoiding a large amount of control signaling overhead and frequent switching of a terminal, realizing real-time matching of a network service capability and the user requirement, and further ensuring the flexibility and high efficiency of user plane data transmission.

It should be understood that although the steps in the flowchart in the above embodiment are displayed in sequence as indicated by the arrow, these steps are not necessarily executed in sequence as indicated by the arrow. Unless explicitly stated herein, the execution of these steps is not strictly limited in order, and they can be executed in other orders. Moreover, at least a part of the steps in the diagram may include a plurality of sub-steps or stages, which may not necessarily be completed at the same time, but may be executed at different times, and the execution order may not necessarily be sequential, but may be executed alternately or alternately with other steps or at least a part of sub-steps or stages of other steps.

In some embodiments, a communication apparatus is provided, which is applied to a user plane, and the user plane and the control plane are separately deployed.

FIG. 6 is a schematic diagram of a communication apparatus provided by an embodiment of the present disclosure. As shown in FIG. 6, the apparatus includes:
a first sending module 610, configured to send a second connection establishment request message to the control plane in response to receiving a first connection establishment request message from the UE;
a second sending module 620, configured to send a first connection establishment response message to the terminal device UE in response to receiving a second connection establishment response message from the control plane; and
a third sending module 630, configured to send a connection configuration update message to the UE in response to receiving a connection management message from the control plane, where the connection configuration update message is used to indicate the UE to perform an access point TRP update processing and/or configuration update processing for a wireless parameter.

In some embodiments, at least one of the following is further included:
the first connection establishment request message includes a service establishment request sent by the UE to the user plane;
the first connection establishment response message includes a connection establishment response sent by the user plane to the UE.

In some embodiments, a communication apparatus is provided, which is applied to a control plane, and the control plane and the user plane are separately deployed.

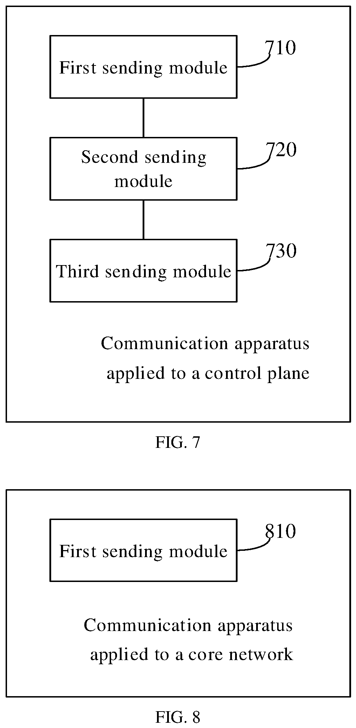

FIG. 7 is a schematic diagram of a communication apparatus provided by an embodiment of the present disclosure. As shown in FIG. 7, the apparatus includes:
a first sending module 710, configured to send a second connection establishment response message to a user plane in response to receiving a second connection establishment request message from the user plane;
a second sending module 720, configured to send a third connection establishment request message to the core network; and
a third sending module 730, configured to send a connection management message to the user plane in response to receiving a third connection establishment response message from the core network.

In some embodiments, sending the second connection establishment response message to the user plane in response to receiving the second connection establishment request message from the user plane includes:
establishing terminal device UE context information of the in response to receiving the second connection establishment request message from the user plane, and sending a second connection establishment response message to the user plane.

In some embodiments, sending the connection management message to the user plane in response to receiving the third connection establishment response message from the core network includes:
updating UE context information in response to receiving a third connection establishment response message from the core network, and sending a connection management message to the user plane.

In some embodiments, the second sending module 720 is further configured to send a second connection update request message to the core network in response to receiving the first connection update request message from a UE;
send a first connection update response message to the UE in response to receiving a second connection update response message from the core network; and
send a connection update message to the UE, where the connection update message is used to indicate the UE to perform access point TRP update processing and/or configuration update processing for a wireless parameter.

In some embodiments, at least one of the following is further included:
the second connection establishment request message includes a connection establishment request sent by the user to the control plane;
the second connection establishment response message includes a connection establishment response sent by the control plane to the user plane;
the third connection establishment request message includes the service request sent by the control plane to the core network;
the third connection establishment response message includes a service response sent by the core network to the control plane;
the first connection update request message includes a signaling connection update request sent by the UE to an updated target control plane;
the first connection update response message includes a signaling connection update response sent by the target control plane to the UE;
the second connection update request message includes a bearer update request sent by the target control plane to the core network;
the second connection update response message includes a bearer update response sent by the core network to the target control plane.

In some embodiments, a communication apparatus is provided, which is applied to a core network.

FIG. 8 is a schematic diagram of a communication apparatus provided by an embodiment of the present disclosure. As shown in FIG. 8, the apparatus includes:
a first sending module 810, configured to send a third connection establishment response message to the control plane in response to receiving a third connection establishment request message from the control plane; where the control plane and the user plane are separately deployed.

In some embodiments, the first sending module 810 is further configured to send a second connection update response message to a target control plane in response to receiving a second connection update request message from the target control plane.

In some embodiments, a communication apparatus is provided, which is applied to a terminal device.

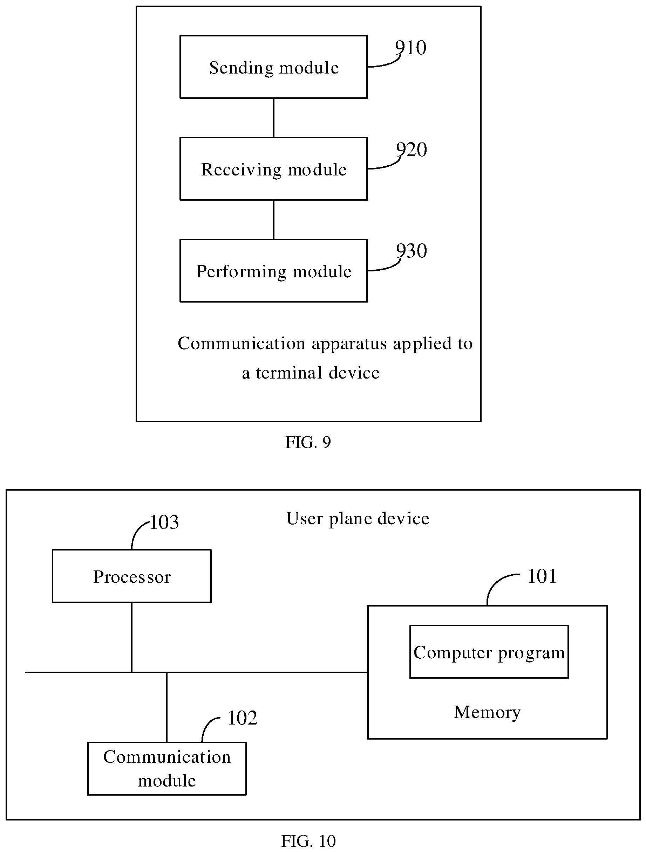

FIG. 9 is a schematic diagram of a communication apparatus provided by an embodiment of the present disclosure. As shown in FIG. 9, the apparatus includes:
a sending module 910, configured to send a first connection establishment request message to a user plane, where the user plane and the control plane are separately deployed;
a receiving module 920, configured to receive a first connection establishment response message sent by the user plane; and
a processing module 930, configured to perform access point TRP update processing and/or configuration update processing for a wireless parameter in response to receiving a connection configuration update message from the user plane.

In some embodiments, the sending module 910 is further configured to send a first connection update request message to the updated target control plane when there is a need for control plane connection update; receive a first connection update response message sent by the target control plane; and perform access point TRP update processing and/or configuration update processing for a wireless parameter in response to receiving a connection update message from the target control plane.

In some embodiments, determining that there is the control plane connection update requirement for the UE when a location of the UE changes.

In some embodiments, determining that there is the control plane connection update requirement for the UE when the location of the UE changes and a distance between a post-changing location and a prior-changing location reaches a preset threshold.

In some embodiments, sending the first connection establishment request message to the user plane includes:
selecting a user plane entity or instance in the user plane in a case that there is a network access requirement, and sending the first connection establishment request message to the selected user plane entity or instance.

For the specific definition of communication apparatus, please refer to the definition of communication method above, and will not repeat it here. Each module in the above communication apparatus can be realized in whole or in part by software, hardware and their combinations. The above modules can be embedded in or independent of the processor in the computer device in the form of hardware, and can also be stored in the memory in the computer device in the form of software, so that the processor can call and execute the operations corresponding to the above modules.

In some embodiments, a user plane device is provided.

FIG. 10 is a schematic structural diagram of a user plane device provided by an embodiment of the present disclosure. As shown in FIG. 10, the user plane device includes a memory 101, a communication module 102, and a processor 103.

The memory is configured to store computer programs; the communication module is configured to receive and send data under the control of the processor; the processor is configured to read the computer program in the memory and perform the following operations:
sending a second connection establishment request message to a control plane in response to receiving the first connection establishment request message from a UE;
sending a first connection establishment response message to the terminal device UE in response to receiving a second connection establishment response message from the control plane; and
sending a connection configuration update message to the UE in response to receiving a connection management message from the control plane, wherein the connection configuration update message is used to indicate the UE to perform access point TRP update processing and/or configuration update process for a wireless parameter.

In some embodiments, at least one of the following is further included:
the first connection establishment request message includes a service establishment request sent by the UE to the user plane;
the first connection establishment response message includes a connection establishment response sent by the user plane to the UE.

In some embodiments, a control plane device is provided.

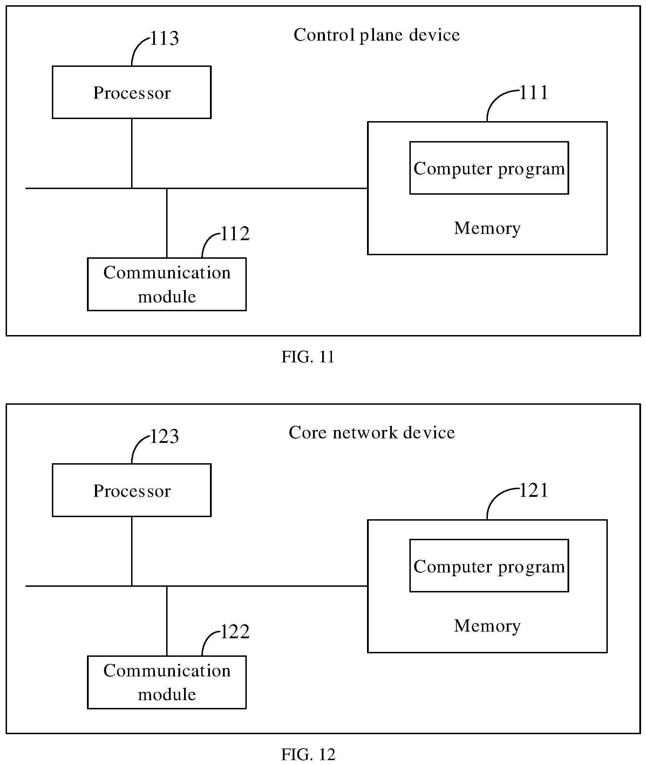

FIG. 11 is a schematic structural diagram of a control plane device provided by an embodiment of the present disclosure. As shown in FIG. 11, the control plane device includes a memory 111, a communication module 112, and a processor 113.

The memory is configured to store computer programs; the communication module is configured to receive and send data under the control of the processor; the processor is configured to read the computer program in the memory and performing the following operations:
sending a second connection establishment response message to a user plane in response to receiving a second connection establishment request message from the user plane;
sending a third connection establishment request message to a core network; and
sending a connection management message to the user plane in response to receiving a third connection establishment response message from the core network.

In some embodiments, sending the second connection establishment response message to the user plane in response to receiving the second connection establishment request message from the user plane includes:
establishing terminal device UE context information in response to receiving the second connection establishment request message from the user plane, and sending the second connection establishment response message to the user plane.

In some embodiments, sending the connection management message to the user plane in response to receiving the third connection establishment response message from the core network includes:
updating UE context information and sending the connection management message to the user plane in response to receiving the third connection establishment response message from the core network.

In some embodiments, further including:
sending a second connection update request message to the core network in response to receiving a first connection update request message from a UE;
sending a first connection update response message to the UE in response to receiving a second connection update response message from the core network; and
sending a connection update message to the UE, where the connection update message is used to indicate the UE to perform access point TRP update processing and/or configuration update processing for a wireless parameter.

In some embodiments, at least one of the following is further included:
the second connection establishment request message includes a connection establishment request sent by the user plane to the control plane;
the second connection establishment response message includes a connection establishment response sent by the control plane to the user plane;
the third connection establishment request message includes the service request sent by the control plane to the core network;
the third connection establishment response message includes a service response sent by the core network to the control plane;
the first connection update request message includes a signaling connection update request sent by the UE to an updated target control plane;
the first connection update response message includes a signaling connection update response sent by the target control plane to the UE;
the second connection update request message includes a bearer update request sent by the target control plane to the core network;
the second connection update response message includes a bearer update response sent by the core network to the target control plane.

In some embodiments, a core network device is provided.

FIG. 12 is a schematic structural diagram of a core network device provided by an embodiment of the present disclosure. As shown in FIG. 12, the core network device includes a memory 121, a communication module 122, and a processor 123.

The memory is configured to store computer programs; The communication module is configured to receive and send data under the control of the processor; the processor is configured to read the computer program in the memory and perform the following operations:
sending a third connection establishment response message to a control plane in response to receiving a third connection establishment request message from the control plane;
where the control plane and the user plane are separately deployed.

In some embodiments, further including:
sending a second connection update response message to a target control plane in response to receiving a second connection update request message from the target control plane.

In some embodiments, a terminal device is provided.

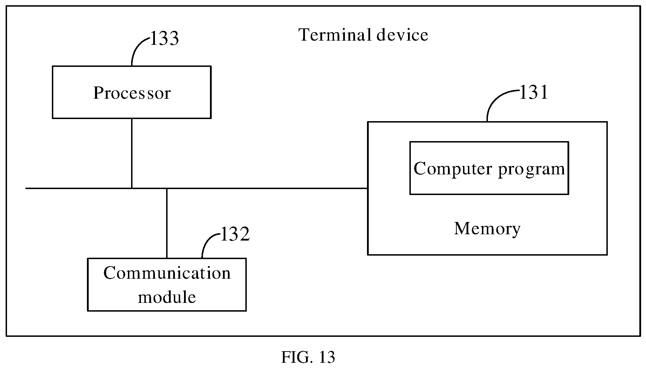

FIG. 13 is a schematic structural diagram of a terminal device provided by an embodiment of the present disclosure. As shown in FIG. 13, the terminal device includes a memory 131, a communication module 132, and a processor 133.

The memory is configured to store computer programs; The communication module is configured to receive and send data under the control of the processor; a processor is configured to read the computer program in the memory and perform the following operations:
sending a first connection establishment request message to a user plane, where the user plane and the control plane are separately deployed;
receiving a first connection establishment response message sent by the user plane;
performing access point TRP update processing and/or configuration update processing for a wireless parameter in response to receiving a connection configuration update message from the user plane.

In some embodiments, further including:
sending a first connection update request message to an updated target control plane, when there is a control plane connection update requirement for the control plane;
receiving a first connection update response message sent by the target control plane; and
performing access point TRP update processing and/or configuration update processing for a wireless parameter in response to receiving a connection update message from the target control plane.

In some embodiments, determining that there is the control plane connection update requirement for the UE when a location of the UE changes.

In some embodiments, determining that there is the control plane connection update requirement for the UE when the location of the UE changes and a distance between a post-changing location and a prior-changing location reaches a preset threshold.

In some embodiments, sending the first connection establishment request message to the user plane includes:
selecting a user plane entity or instance in the user plane in a case that there is a network access requirement, and sending the first connection establishment request message to the selected user plane entity or instance.

In the aforementioned devices, the memory and the processor are directly or indirectly electrically connected to each other for a purpose of transmission or interaction of data. For example, these elements may be electrically connected to each other via one or more communication buses or signal lines, e.g., they may be connected via a bus. The memory stores an computer executable instruction for implementing the data access control method, and includes at least one software function module which may be stored in the memory in a form of software or firmware, and the processor executes various functional applications as well as data processing by running a software program as well as a module stored in the memory.

The memory may be, but is not limited to, a random access memory (Random Access Memory, RAM), a read only memory (Read Only Memory, ROM), a programmable read-only memory (Programmable Read-Only Memory, PROM), an erasable read-only memory (Erasable Programmable Read-Only Memory, EPROM), an electric erasable read-only memory (Electric Erasable Programmable Read-Only Memory, EEPROM), etc. The memory is configured to store a program and the processor executes the program after receiving an execution instruction. Further, the software program as well as the module in the aforementioned memory may further include an operating system, which may include various software components and/or drivers for managing system tasks (e.g., memory management, storage device control, power management, etc.) and may be in mutual communication with various hardware or software components so as to provide an operating environment for other software components.

The processor may be an integrated circuit chip with signal processing capabilities. The aforementioned processor may be a general purpose processor, including a central processing unit (Central Processing Unit, CPU), a network processor (Network Processor, NP), etc. Various disclosed methods, steps, and logical block diagrams in the embodiments of the present disclosure may be implemented or executed. The general purpose processor may be a microprocessor or the processor may also be any conventional processor, etc.

In some embodiments, a computer readable storage medium is provided, and the computer readable storage medium store a computer executable instruction, which when being executed by a processor, is used for implementing the steps of various method embodiments in the present disclosure.

In some embodiments, a computer program product is provided, including a computer program, which when being executed by a processor, is used for implementing the steps of various method embodiments in the present disclosure.

A person of ordinary skill in the art can understand that implementing all or part of the processes in the methods of the aforementioned embodiments may be accomplished by instructing related hardware by means of a computer program, the computer program may be stored in a non-volatile computer readable storage medium, and when being executed, the computer program may include the processes of the aforementioned method embodiments. Any reference to a memory, storage, a database, or other media used in the embodiments provided in the present disclosure may include non-volatile and/or volatile memory. The non-volatile memory may include a read only memory (ROM), a programmable ROM (PROM), an electrically programmable ROM (EPROM), an electrically erasable programmable ROM (EEPROM), or a flash memory. The volatile memory may include a random access memory (RAM) or an external cache memory. By way of illustration and not limitation, RAM is available in a variety of forms, for example, a static RAM (SRAM), a dynamic RAM (DRAM), a synchronous DRAM (SDRAM), a dual data rate SDRAM (DDRSDRAM), an enhanced SDRAM (ESDRAM), a synchronous link DRAM (SLDRAM), a rambus (Rambus) direct RAM (RDRAM), a direct rambus dynamic RAM (DRDRAM), and a rambus dynamic RAM (RDRAM).

Other implementation solutions of the present disclosure will easily come to mind to those skilled in the art upon consideration of the specification and practice of the application disclosed herein. The present disclosure is intended to cover any variations, uses, or adaptive modifications of the present disclosure which follow general principles of the present disclosure and include common knowledge or customary technical means in the present technical field which are not disclosed in the present disclosure. The specification and the embodiments are to be regarded as exemplary only, and the true scope and spirit of the present disclosure is indicated by following claims.

It should be understood that the present disclosure is not limited to a precise structure which has been described above and shown in the drawings, and that various modifications and changes may be made without departing from scope thereof. The scope of the present disclosure is limited only by the appended claims.

## Claims

1. A communication method, applied to a control plane, **characterized in that** the control plane and a user plane are separately deployed, and the method comprises:
sending a second connection establishment response message to the user plane in response to receiving a second connection establishment request message from the user plane;
sending a third connection establishment request message to a core network; and
sending a connection management message to the user plane in response to receiving a third connection establishment response message from the core network.

2. The method according to claim 1, wherein sending the second connection establishment response message to the user plane in response to receiving the second connection establishment request message from the user plane comprises:
establishing terminal device UE context information in response to receiving the second connection establishment request message from the user plane, and sending the second connection establishment response message to the user plane.

3. The method according to claim 1, wherein sending the connection management message to the user plane in response to receiving the third connection establishment response message from the core network comprises:
updating UE context information and sending the connection management message to the user plane in response to receiving the third connection establishment response message from the core network.

4. The method according to any one of claims 1 to 3, further comprising:
sending a second connection update request message to the core network in response to receiving a first connection update request message from a UE;
sending a first connection update response message to the UE in response to receiving a second connection update response message from the core network; and
sending a connection update message to the UE, wherein the connection update message is used to indicate the UE to perform access point TRP update processing and/or configuration update processing for a wireless parameter.

5. The method according to claim 4, wherein the method further comprises at least one of the following:
the second connection establishment request message comprises a connection establishment request sent by the user plane to the control plane;
the second connection establishment response message comprises a connection establishment response sent by the control plane to the user plane;
the third connection establishment request message comprises a service request sent by the control plane to the core network;
the third connection establishment response message comprises a service response sent by the core network to the control plane;
the first connection update request message comprises a signaling connection update request sent by the UE to an updated target control plane;
the first connection update response message comprises a signaling connection update response sent by the target control plane to the UE;
the second connection update request message comprises a bearer update request sent by the target control plane to the core network;
the second connection update response message comprises a bearer update response sent by the core network to the target control plane.

6. A communication method, applied to a user plane, **characterized in that** the user plane and a control plane are separately deployed, and the method comprises:
sending a second connection establishment request message to the control plane in response to receiving a first connection establishment request message from a UE;
sending a first connection establishment response message to the terminal device UE in response to receiving a second connection establishment response message from the control plane; and
sending a connection configuration update message to the UE in response to receiving a connection management message from the control plane, wherein the connection configuration update message is used to indicate the UE to perform access point TRP update processing and/or configuration update processing for a wireless parameter.

7. The method according to claim 6, wherein the method further comprises at least one of the following:
the first connection establishment request message comprises a service establishment request sent by the UE to the user plane;
the first connection establishment response message comprises a connection establishment response sent by the user plane to the UE.

8. A communication method, applied to a core network, **characterized in that** the method comprises:
sending a third connection establishment response message to a control plane in response to receiving a third connection establishment request message from the control plane;
wherein the control plane and a user plane are separately deployed.

9. The method according to claim 8, further comprising:
sending a second connection update response message to a target control plane in response to receiving a second connection update request message from the target control plane.

10. A communication method, applied to a UE, **characterized in that** the method comprises:
sending a first connection establishment request message to a user plane, wherein the user plane and a control plane are separately deployed;
receiving a first connection establishment response message sent by the user plane; and
performing access point TRP update processing and/or configuration update processing for a wireless parameter in response to receiving a connection configuration update message from the user plane.

11. The method according to claim 10, further comprising:
sending a first connection update request message to an updated target control plane when there is a control plane connection update requirement;
receiving a first connection update response message sent by the target control plane; and
performing access point TRP update processing and/or configuration update processing for a wireless parameter in response to receiving a connection update message from the target control plane.

12. The method according to claim 11, wherein determining that there is the control plane connection update requirement for the UE when a location of the UE changes.

13. The method according to claim 12, wherein determining that there is the control plane connection update requirement for the UE when the location of the UE changes and a distance between a post-changing location and a prior-changing location reaches a preset threshold.

14. The method according to any one of claims 10 to 13, wherein sending the first connection establishment request message to the user plane comprises:
selecting a user plane entity or instance in the user plane in a case that there is a network access requirement, and sending the first connection establishment request message to the selected user plane entity or instance.

15. A communication apparatus, applied to a user plane, **characterized in that** the user plane and a control plane are separately deployed, and the apparatus comprises:
a first sending module, configured to send a second connection establishment request message to the control plane in response to receiving a first connection establishment request message from a UE;
a second sending module, configured to send a first connection establishment response message to the terminal device UE in response to receiving a second connection establishment response message from the control plane; and
a third sending module, configured to send a connection configuration update message to the UE in response to receiving a connection management message from the control plane, wherein the connection configuration update message is used to indicate the UE to perform access point TRP update processing and/or configuration update processing for a wireless parameter.

16. A communication apparatus, applied to a control plane, **characterized in that** the control plane and a user plane are separately deployed, and the apparatus comprises:
a first sending module, configured to send a second connection establishment response message to the user plane in response to receiving a second connection establishment request message from the user plane;
a second sending module, configured to send a third connection establishment request message to a core network; and
a third sending module, configured to send a connection management message to the user plane in response to receiving a third connection establishment response message from the core network.

17. A communication apparatus, applied to a core network, **characterized in that** the apparatus comprises:
a first sending module, configured to send a third connection establishment response message to a control plane in response to receiving a third connection establishment request message from the control plane;
wherein the control plane and a user plane are separately deployed.

18. A communication apparatus, applied to terminal device, **characterized in that** the apparatus comprises:
a sending module, configured to send a first connection establishment request message to a user plane, wherein the user plane and a control plane are separately deployed;
a receiving module, configured to receive a first connection establishment response message sent by the user plane; and
a processing module, configured to perform access point TRP update processing and/or configuration update processing for a wireless parameter in response to receiving a connection configuration update message from the user plane.

19. A user plane device, **characterized by** comprising a memory, a communication module, and a processor,
wherein the memory is configured to store a computer program; the communication module is configured to send and receive data under control of the processor; the processor is configured to read the computer program in the memory and perform the following operations:
sending a second connection establishment request message to a control plane in response to receiving the first connection establishment request message from a UE;
sending a first connection establishment response message to the terminal device UE in response to receiving a second connection establishment response message from the control plane; and
sending a connection configuration update message to the UE in response to receiving a connection management message from the control plane, wherein the connection configuration update message is used to indicate the UE to perform access point TRP update processing and/or configuration update process for a wireless parameter.

20. A control plane device, **characterized by** comprising a memory, a communication module, and a processor,
the memory is configured to store a computer program; the communication module is configured to send and receive data under control of the processor; the processor is configured to read the computer program in the memory and perform the following operations:
sending a second connection establishment response message to a user plane in response to receiving a second connection establishment request message from the user plane;
sending a third connection establishment request message to a core network; and
sending a connection management message to the user plane in response to receiving a third connection establishment response message from the core network.

21. A core network device, **characterized by** comprising a memory, a communication module, and a processor,
the memory is configured to store a computer program; the communication module is configured to send and receive data under control of the processor; the processor is configured to read the computer program in the memory and perform the following operations:
sending a third connection establishment response message to a control plane in response to receiving a third connection establishment request message from the control plane;
wherein the control plane and a user plane are separately deployed.

22. A terminal device, **characterized by** comprising a memory, a communication module, and a processor,
the memory is configured to store a computer program; the communication module is configured to send and receive data under the control of the processor; the processor is configured to read the computer program in the memory and perform the following operations:
sending a first connection establishment request message to a user plane, wherein the user plane and a control plane are separately deployed;
receiving a first connection establishment response message sent by the user plane;
performing access point TRP update processing and/or configuration update processing for a wireless parameter in response to receiving a connection configuration update message from the user plane.

23. A computer readable storage medium, wherein the computer readable storage medium storing computer executable instructions, wherein the computer executable instructions executed by a processor to perform the communication method of any of claims 1-14.
